# FASCICULE DE BREVET EUROPEEN

(11) **EP 0 577 195 B1**
(45) Date de publication et mention de la délivrance du brevet: **22.01.1997**
(21) Numéro de dépôt: 93201819.5
(22) Date de dépôt: 23.06.1993
(51) Int. Cl.: B29C 33/08

(54) **Moule pour le moulage de matières plastiques par l'application d'un champs électromagnétique**
Form zum Formen von plastischen Massen bei der Anwendung eines elektromagnetischen Feldes
Mould for moulding plastic materials by applying an electromagnetic field

(30) Priorité: 01.07.1992 IT TO920549
(43) Date de publication de la demande: 05.01.1994
(73) Titulaire: SOCIETA' ITALIANA VETRO- SIV-SpA, 66050 San Salvo (Chieti) (IT)
(72) Inventeur: Parisi, Nicola, Dr. Ing., I-10125 Torino (IT)
(74) Mandataire: Tonon, Gilberto

(56) Documents cités:
- EP-A- 0 159 368
- EP-A- 0 368 669
- EP-A- 0 406 045
- FR-A- 2 251 421
- FR-A- 2 563 742
- FR-A- 2 653 700
- US-A- 5 082 436

## Description

La présente invention a pour objet un moule pour le moulage de matières plastiques au moyen d'un procédé dans lequel la chaleur nécessaire pour la fusion, la polymérisation ou la polycondensation de la matière plastique en cours de moulage est appliquée moyennant l'application d'un champ électromagnétique de type capacitif ou inductif.

Il est connu depuis beaucoup de temps que la plupart des matériaux non conducteurs, soumis à un champ électromagnétique alterné, se réchauffent en raison des pertes diélectriques internes. Le brevet italien No. 1.195.171 a proposé d'utiliser ce phénomène pour appliquer à une matière plastique introduite (à l'état poudreux, granulé ou liquide) dans un moule, la chaleur nécessaire pour sa fusion, sa polymérisation ou sa polycondensation, ainsi réalisant un nouveau procédé de moulage des matières plastiques, convenable notamment en termes de praticité, de réduction des temps de travail et d'économie d'énergie. De plus, du fait que les moules à utiliser dans ce procédé peuvent être fabriqués en un matériau quelque peu souple, tel qu'une silicone, ce procédé est particulièrement approprié pour le surmoulage de pièces insérées qui pourraient être détériorées, comme par exemple dans le moulage de cadres de matière plastique sur le pourtour de vitrages pour véhicules, en réduisant d'une façon substantielle la possibilité de rupture de la pièce insérée en conséquence de l'action de serrage effectuée par le moule.

D'habitude, dans la mise en oeuvre d'un procédé de ce type, on emploie comme armatures destinées à réaliser une induction capacitive les plaques d'une presse de moulage sur laquelle on monte le moule, ou bien les plaques qui limitent le moule et qui viennent en contact avec les plaques de la presse, lesquelles dans ce but sont connectées à une source d'énergie électrique, en général de haute ou de très haute fréquence. Ces plaques, par leur nature et pour des nécessités mécaniques, sont planes et parallèles. Un exemple de cette disposition usuel le peut être observée dans le brevet européen No. 0.333.538. Cette disposition comporte des graves inconvénients. En effet, si les régions dans lesquelles sont situées les cavités du moule, dans lesquelles le moulage doit avoir lieu, ne couvrent qu'une petite partie de la surface définie par les plaques de la presse, l'induction est appliquée sans discrimination soit dans lesdites régions, soit aussi dans les régions, dont l'étendue est bien plus grande, dans lesquelles aucun moulage ne doit avoir lieu et donc aucun réchauffement n'est nécessaire. D'un côté cela comporte une perte d'énergie, et d'autre côté les parties du moule et des pièces insérées éventuelles, qui ne demandent pas d'être réchauffées, sont soumises à un réchauffement inutile et parfois nuisible. Il s'ensuit aussi une augmentation des temps de travail et, ce qui est particulièrement grave, la possibilité d'endommager la pièce insérée, par exemple de casser un vitrage.

Mais l'inconvénient le plus grave de la disposition connue indiquée réside dans le fait que, dans les régions dans lesquelles le moulage doit avoir lieu, l'uniformité du champ électromagnétique (nécessaire pour réaliser un réchauffement uniforme et contrôlé de la matière plastique à mouler) peut être obtenue seulement dans le cas de conformations particulièrement simples des pièces à mouler. Lorsque ces conditions ne se vérifient pas, l'énergie induite dans la matière plastique à mouler se modifie, parfois en une mesure importante, d'un point à l'autre, et par conséquent se modifie d'un point à l'autre aussi la température atteinte par la matière plastique. Il s'ensuit que dans certaines régions la matière plastiques n'est pas suffisamment réchauffée, ou bien qu'elle est réchauffée excessivement, de sorte qu'on n'arrive pas à un produit parfait. En outre, ces sollicitations thermiques non équilibrées donnent une contribution importante à la possibilité d'endommager la pièce insérée, lorsque celle-ci est présente. A la limite, en présence de défauts d'homogénéité des matériaux, peuvent aussi se produire des décharges disruptives capables d'endommager gravement soit les produits, soit le moule.

Le document EP-A-0.368.669 montre une disposition de deux électrodes appliqués aux plaques d'une moule dans la région du cadre d'un vitrage. Cette disposition peut permettre de réaliser une certaine uniformité du champ électromagnétique, mais seulement si la pièce à mouler a une forme relativement simple. Elle ne suffit pas lors que la pièce à mouler a une forme relativement complexe, et ne représente donc pas une solution générale des problèmes posés par le moulage de matières plastiques moyennant l'application d'un champ électromagnétique.

Un but de la présente invention est de proposer un moule perfectionné pour l'emploi dans les procédés du type indiqué, dans lequel on prévoit des dispositions spéciales permettant de réaliser, dans les régions dans lesquelles le moulage doit être effectué, une uniformité du champ électromagnétique, suffisante pour assurer un traitement correct de la matière plastique à mouler.

Un autre but de l'invention est de proposer un moule perfectionné pour l'emploi dans les procédé du type indiqué, dans lequel l'application de la chaleur est principalement limitée aux régions dans lesquelles le moulage doit être effectué, en réduisant au minimum possible les sollicitations thermiques appliquées aux parties du moule qui ne sont pas directement intéressées à l'action de moulage, ainsi qu'aux pièces insérées éventuellement présentes.

Le premier, ou bien le deuxième but de l'invention, ou bien encore tous les deux, sont atteints, suivant l'invention, dans un moule pour le moulage de matières plastiques au moyen d'un procédé dans lequel la chaleur nécessaire est appliquée à la matière plastique en cours de moulage moyennant l'application d'un champ électromagnétique, ce moule étant principalement constitué par un matériau non conducteur de l'électricité interposé entre des plaques, et étant soumis à l'action de moyens de génération d'un champ électromagnétique connectés à une source appropriée d'énergie électrique, dans le matériau non conducteur de l'électricité étant incorporé au moins un organe conducteur pour le champ électromagnétique, en contact matériel avec l'une des plaques du moule à proximité d'une région active de moulage, ledit organe étant conformé de sorte à comporter une largeur plus grande que celle de la pièce à mouler et une distance de celle-ci substantiellement constante dans tous les endroits, en ce que le moule comprend au moins un organe conducteur supplémentaire disposé de sorte qu'il n'est pas en contact matériel avec les plaques du moule. Si nécessaire, lesdits organes conducteurs peuvent être plus qu'un.

Dans les cas où les pièces à mouler occupent substantiellement toute l'extension du moule, lesdits organes conducteurs incorporés peuvent avoir substantiellement la seule fonction de rendre uniforme le champ électromagnétique en correspondance des régions de moulage. Au contraire, dans les cas où les pièces à mouler n'occupent qu'une partie de l'extension du moule, lesdits organes conducteurs peuvent avoir aussi, ou seulement, la fonction de concentrer le champ électromagnétique en correspondance des régions de moulage, en évitant ou limitant un réchauffement inutile ou nuisible des autres régions.

Dans l'application de l'invention, les plaques métalliques de la presse, ou bien des plaques métalliques limitant le moule, peuvent être comme d'habitude connectées à une source appropriée d'énergie électrique, pour être utilisées comme armatures dans le but de réaliser une induction capacitive. Dans ce cas, de préférence au moins une partie des organes conducteurs incorporés dans le moule sont connectés électriquement auxdites plaques. Toutefois il est aussi possible de connecter directement à la source d'énergie électrique seulement les organes conducteurs, sans impliquer lesdites plaques dans le circuit d'alimentation. D'autre part, certains organes conducteurs incorporés dans le moule peuvent aussi ne pas être connectés, ni directement ni indirectement, à une source d'énergie électrique, et alors leur fonction est de produire des surfaces équipotentielles destinées à guider le champ électromagnétique, tout sans prendre partie active à l'application de l'énergie. En outre, l'application du champ électromagnétique peut être aussi effectuée en employant des moyens inductifs au lieu que des moyens capacitifs.

Dans les cas où le moule est utilisé pour le surmoulage d'une pièce insérée métallique ou comportant des parties conductrices, la pièce insérée elle-même, ou bien ses parties conductrices, peuvent être utilisées pour constituer certains des organes conducteurs incorporés dans le moule dans les buts de l'invention. Cela s'applique en particulier au cas des toits de véhicules en cristal revêtu d'une mince couche de métal, au cas des vitrages incorporant des fils métalliques, au cas des vitres thermiques et similaires.

Ces caractéristiques et d'autres et les avantages de l'invention ressortiront plus clairement de la suivante description de certaines exemples de réalisation, non limitatifs, représentés schématiquement dans les dessins annéxés, dans lesquels:
Fig. 1 est une représentation schématique en section d'une partie d'un moule suivant l'état de la technique représenté par le document EP A-0.368.669, destiné à surmouler un cadre périphérique sur un vitrage de véhicule;
Fig. 2 montre d'une façon similaire une partie d'un moule dans lequel le revêtement métallique d'un cristal est utilisé pour exécuter la fonction de l'un des organes conducteurs suivant l'invention; et
Fig. 3 montre d'une façon similaire une partie d'un moule plus compliqué, comportant deux organes conducteurs connectés à une source d'énergie électrique et un organe conducteur non connecté à aucune source.

Les exemples choisis pour illustrer l'invention se réfèrent au moulage d'un cadre de matière plastique sur le pourtour d'un vitrage de véhicule. Il s'agit d'une application pour laquelle le moule suivant l'invention est notamment approprié, aussi en ce que dans cette application on vérifie plus fréquemment les inconvénients indiqués, se référant à la mise en oeuvre du procédé par l'emploi des moules habituels. Toutefois il faut comprendre que ce moule peut être aussi employé pour le surmoulage d'une pièce insérée quelconque, différente d'un vitrage, ainsi que pour le moulage de pièces ne comportant pas des parties insérées. En outre, dans les exemples décrits on a supposé que l'application du champ électromagnétique soit effectuée par l'emploi de moyens capacitifs, comme il est généralement préféré à présent, mais il faut comprendre que cette application peut être faite aussi par l'emploi de moyens inductifs.

Dans toutes les figures, par les numéros 1 et 2 on a indiqué deux plaques métalliques, lesquelles peuvent être les plaques de pression d'une presse ou bien les plaques qui limitent le moule et qui viennent en contact avec les plaques de pression de la presse; ces plaques sont connectées à une source appropriée d'énergie électrique alternée, habituellement à haute fréquence ou bien à très haute fréquence, indiquée symboliquement par les signes + et -. Ce type de connection électrique d'alimentation est avantageux en plusieurs cas pour des raisons pratiques, et pour cette raison il a été choisi comme exemple, mais il n'est pas indispensable pour le moule suivant l'invention, comme on l'éclaircira plus avant. Par conséquent, dans les cas où l'alimentation électrique n'est pas effectuée à travers les plaques 1 et 2, ces dernières peuvent aussi ne pas être métalliques. Entre les plaques 1 et 2, le moule comporte des masses 3 et 4 d'un matériau approprié, lesquelles sont conformées de sorte à délimiter dans leur ensemble, lorsque les deux parties 1-3 et 2-4 du moule sont juxtaposées (comme on les a représentées), les cavités dans lesquelles doit être effectué le moulage, ainsi que, le cas échéant, des cavités destinées à recevoir une ou plusieurs pièces à surmouler, et/ou des cavités destinées à demeurer non occupées. Le matériau constituant les masses 3 et 4 doit ne pas être conducteur et il doit présenter des pertes diélectriques réduites; lorsque ces conditions sont remplies, ce matériau peut être de nature différente et il peut présenter toute rigidité, suivant les exigences de l'application prévue. Pour des applications du genre de celles qu'on a montré comme exemples, il est à propos que ce matériau soit un élastomère de silicone ou un autre matériau techniquement équivalent.

Bien entendu, un moule doit encore comporter d'autres caractéristiques complémentaires de structure, comme des passages d'alimentation, des conduits de refroidissement, et ainsi de suite, lesquelles n'ont pas été représentées parce qu'elles appartiennent à la technique connue et ne demandent pas d'être modifiées pour l'application de l'invention.

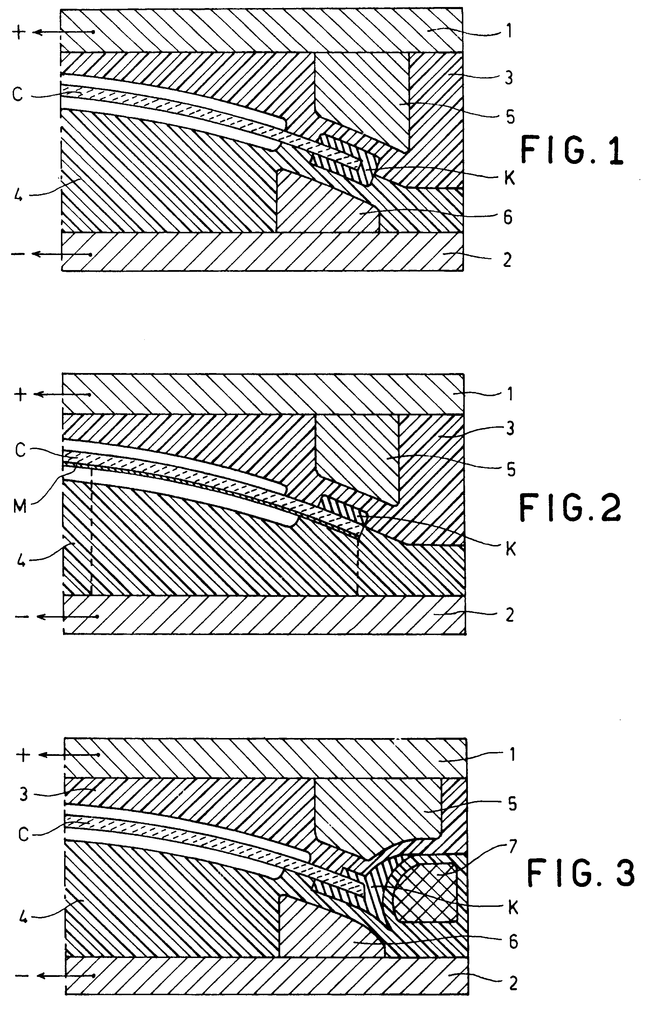

Faisant référence à la figure 1, y est représenté un moule destiné à surmouler sur le pourtour d'un vitrage C, qui dans ce cas est courbé, un cadre K dont la forme est très simple, comportant une section transversale substantiellement rectangulaire. Dans un cas comme le présent, en procédant suivant la technique connue, à savoir en appliquant le champ électromagnétique par l'emploi des plaques 1 et 2 seulement, on pourrait obtenir un réchauffement suffisamment uni forme dans la cavité du moule qui détermine le cadre K, du fait que celui-ci a une conformation extrèmement simple et une section constante, mais ce même champ électromagnétique serait appliqué d'une façon indifférenciée à toutes les masses 3 et 4 du moule ainsi qu'au vitrage C, ainsi comportant un gaspillage d'énergie et des réchauffements non contrôlés, avec les conséquences nuisibles y afférentes. De plus, il est évident que la différence de potentiel qu'on devrait appliquer entre les plaques 1 et 2 serait grande par rapport à sa fraction appliquée au cadre périphérique K et donc utilisée pour le réchauffement de la matière plastique destinée à former cette pièce.

En vue de la simplicité de la pièce a mouler, cette situation peut être améliorée suivant l'enseignement du document EP-A-0.368.669, en ce que deux organes 5 et 6, conducteurs pour le champ électromagnétique, sont incorporés dans les masses non conductrices 3 et 4 du moule, et ils sont disposés et conformés de sorte à présenter chacun une surface faisant face à une surface correspondante du cadre K, substantiellement parallèle de cette surface et disposée à une distance telle que la partie de masse non conductrice 3 ou 4 interposée présente une épaisseur réduite, dans la mesure autorisée par l'exigence d'assurer un isolement thermique suffisant. Les organes conducteurs s'étendent peu au-delà des marges du cadre K, et ils ont une extension très réduite par rapport à l'étendue totale du moule. Dans le cas représenté, les organes conducteurs 5 et 6 sont en contact électrique avec les plaques métalliques d'alimentation 1 et 2 correspondantes.

Lorsque l'alimentation électrique est appliquée à un pareil moule, comme on le comprend facilement le champ électromagnétique produit se trouve concentré, par la présence des organes conducteurs 5 et 6, surtout dans la région occupée par le cadre périphérique K, où la distance entre les surfaces équipotentielles se faisant face des organes conducteurs 5 et 6 est plus petite, tandis que le champ appliqué à toutes les parties du moule où les organes conducteurs 5 et 6 ne sont pas présents est bien plus réduit, du fait que dans ces régions la distance entre les surfaces équipotentielles représentées par les plaques 1 et 2 est bien plus grande que dans la région du cadre K. Par conséquent, en proportionnant la différence de potentiel d'alimentation et la durée du traitement aux exigences de la région de moulage K, le réchauffement appliqué aux régions environnantes des masses 3 et 4 et à la pièce insérée C est négligeable et ne peut pas produire des dommages. La consommation d'énergie est réduite d'une façon correspondante et, étant égales les autres conditions, la différence de potentiel à appliquer entre les plaques 1 et 2 est réduite elle aussi. Entre autre, cela donne assurance contre l'apparition accidentale de décharges disruptives.

En considération de la forme simple de la section du cadre K qu'on a montré comme exemple, la simple conformation paralléle des surfaces se faisant face des organes conducteurs 5 et 6 est suffisante pour réaliser, en correspondance de la région K, un champ électromagnétique uniforme, et donc les meilleures conditions de traitement de la matière plastique en cours de moulage. Mais il est évident que cela ne serait pas possible si la section du cadre K serait moins simple, et aussi dans le cas où l'on rencontre dans la région de moulage des changements des caractéristiques du diélectrique, par exemple du fait de différences considérables entre les constantes diélectriques de la matière plastique K en cours de moulage, des masses non conductrices 3 et 4 et des pièces insérées éventuelles, comme le cristal C.

Dans ces cas on peut résoudre les problèmes en faisant recours à un organe conducteur supplémentaire suivant l'invention, qui est décri te avec référence aux figures 2 et 3.

La figure 2 se réfère au cas dans lequel le cristal C comporte un revétement conducteur M constitué par une métallisation, dont l'épaisseur a été exagérée dans la figure pour la rendre visible. De tels cristaux sont employés par exemple pour constituer le toit de certains véhicules, ainsi que dans des applications aux bâtiments. Si le cadre K doit être réalisé du côté du cristal C qui est opposé à la métallisation M, cette dernière peut remplacer l'organe conducteur 6 de la figure 1, si elle est connectée électriquement (comme indiqué par une ligne interrompue) à la plaque 2, lorsque cette dernière est utilisée pour l'alimentation électrique du moule, ou bien directement à la source d'énergie électrique. La disposition de l'organe conducteur 5 demeure substantiellement non modifiée. Bien entendu, des dispositions similaires permettent d'employer, en remplacement de l'un des organes conducteurs incorporés dans ce but dans le moule, une pièce insérée conductrice ou pourvue de parties conductrices dont l'étendue et la disposition sont appropriées. Lorsqu'une partie conductrice d'une pièce insérée est utilisée comme organe conducteur aux sens de l'invention en la connectant à une borne de la source électrique d'alimentation, on peut trouver à propos d'employer deux ou plusieurs organes conducteurs incorporés dans la moule dans ce but et connectés à la borne opposée de la source d'énergie.

La figure 3 montre un exemple d'application de l'invention à un moule destiné à mouler un cadre K de forme particulièrement compliquée. Dans ce cas, comme on le comprendra, il ne serait pas possible de conformer deux organes conducteurs 5 et 6 suivant la figure 1 de sorte à réaliser dans toute la région de moulage K un champ électromagnétique suffisamment uniforme. Au contraire, cela peut être obtenu en ajoutant un troisième organe conducteur 7, incorporé dans une des masses non conductrices du moule, dans l'exemple la masse 4, et conformé de façon telle que la permettance associée aux lignes de flux d'induction électrique qui vont de la région de l'organe conducteur 5 faisant face à l'organe conducteur 7, jusqu'à ce dernier, et ensuite de ce dernier à la région faisant face de l'organe conducteur 6, soit substantiellement équivalente à la permettance associée aux lignes de flux d'induction électrique qui vont directement de l'organe conducteur 5 à l'organe conducteur 6 dans la région dans laquelle ces deux organes se font face directement. Dans ces conditions, la région de moulage K est soumise à un champ électromagnétique substantiellement uniforme, et par conséquent le réchauffement induit dans cette région est lui-aussi uni forme. L'organe conducteur 7 n'est pas connecté, ni directement ni indirectement, à la source d'énergie électrique, et sa fonction n'est pas d'alimentation d'énergie mais seulement de produire une surface équipotentielle disposée de telle sorte à réaliser la condition susdite relative à la permettance des lignes de flux du champ. Bien entendu, en présence de formes encore plus complexes de la pièce à mouler, on pourrait prévoir l'incorporation dans le moule d'organes conducteurs ultérieurs. On peut aussi prévoir l'incorporation d'organes conducteurs de dimensions plus petites, destinés à corriger, en interposant des surfaces équipotentielles conformées et disposées d'une façon appropriée, le développement des lignes de flux de l'induction électrique qui résultent de la présence des organes conducteurs principaux, dans le but de réaliser une plus parfaite uniformité du réchauffement, ou même, le cas échéant, une concentration du réchauffement en des points spécifiques, lorsque cela paraît à propos. De plus, dans le cas où la pièce à mouler est accompagnée de pièces insérées conductrices, et que ces dernières ne sont pas utilisées pour l'alimentation d'énergie au moule comme expliqué à propos de la figure 2, ces pièces insérées peuvent être considérées comme des organes conducteurs non connectés à la source d'alimentation, du genre de l'organe conducteur 7, et on tiendra en compte leur présence dans le projet de la conformation et de la disposition des autres organes conducteurs disposés dans le moule.

Les organes conducteurs suivant l'invention peuvent, par exemple, être constitués par des masses d'un métal conducteur, comme l'aluminium ou l'un de ses alliages, fondues en forme appropriée et/ou, le cas échéant, travaillées mécaniquement, ou bien ils peuvent être réalisés en tôle profilée, ou par tout autre moyen. Les organes conducteurs peuvent être massifs, comme on les a représenté, ou bien ils peuvent être allégés dans leurs parties non actives. Dans le cas où l'on fait usage des plaques 1 et 2 pour appliquer l'alimentation électrique, les organes conducteurs 5 et 6 peuvent être simplement en contact électrique avec les plaques respectives, ou bien ils peuvent être connectés à ces plaques moyennant des conducteurs. Toutefois les organes conducteurs pourraient aussi ne pas être en connection électrique avec les plaques 1 et 2, être isolés par rapport à ces plaques et recevoir l'énergie des plaques par induction capacitive. Enfin les organes conducteurs pourraient être connectés directement à la source d'énergie électrique, et dans ce cas les plaques 1 et 2 ne prendraient pas partie à l'alimentation électrique du moule, et elles pourraient aussi ne pas être conductrices. Il sera claire pour l'homme de métier comme tout ce qu'on a dit doit être interprété dans le cas où l'application du champ électromagnétique serait faite par des moyens inductifs au lieu que capacitifs.

L'application de l'invention permet donc de réaliser des moules dans lesquels le moulage par application d'un champ électromagnétique peut être effectué en des conditions et avec des rendements substantiellement plus favorables que ceux autorisés par les moules connus, et de plus autorise l'application avantageuse de ce procédé de moulage pour la réalisation de pièces moulées ayant des conformation trop compliquées pour pouvoir les réaliser utilement par les moules connus. En particulier, dans les cas de surmoulage, la moule suivant l'invention permet de réduire les sollicitations appliquées aux pièces insérées qui peuvent être détériorées, ainsi évitant plusieurs cas de rupture ou d'autre endommagement de ces pièces insérées. Par conséquent, l'emploi d'un moule suivant l'invention autorise, dans certains cas, la production de pièces qui ne pourraient pas être produites par les moules connus, ou bien qui donneraient lieu à des quantité de rebut trop élévées pour pouvoir les accepter dans un procédé industriel. Cela s'applique notamment au traitement des pièces insérées qui pourraient être détériorées, comme les vitrages destinés à former des pare-brise, des vitres arrières ou des toits pour des véhicules, ou destinés à des applications aux bâtiments.

L'invention n'est pas limitée aux exemples décrits et représentés, et il sera claire pour l'homme de métier que des différentes modifications, en sus de celles déjà indiquées, ainsi que tout remplacement par des équivalents techniques, peuvent être portés à ce qu'on a décrit et représenté à titre d'exemple, sans pour cela sortir du cadre de l'invention tel que défini par les revendications.

## Revendications

1. Moule pour le moulage de matières plastiques au moyen d'un procédé dans lequel la chaleur nécessaire est appliquée à la matière plastique (K) en cours de moulage moyennant l'application d'un champ électromagnétique, ce moule étant principalement constitué par un matériau (3,4) non conducteur de l'électricité interposé entre des plaques (1,2), et étant soumis à l'action de moyens de génération d'un champ électromagnétique connectés à une source appropriée d'énergie électrique, dans le matériau (3,4) non conducteur de l'électricité étant incorporé au moins un organe (5,6) conducteur pour le champ électromagnétique, en contact matériel avec l'une des plaques (1,2) du moule à proximité d'une région active de moulage (K), ledit organe (5,6) étant conformé de sorte à comporter une largeur plus grande que celle de la pièce à mouler et une distance de celle-ci substantieliement constante dans tous les endroits,
caractérisé en ce qu'il comprend au moins un organe conducteur supplémentaire (M; 7) disposé de sorte qu'il n'est pas en contact matériel avec les plaques (1,2) du moule.

2. Moule suivant la revendication 1, caractérisé en ce que, dans les cas où les pièces à mouler occupent substantiellement toute l'extension du moule, lesdits organes conducteurs ont principalement la fonction de rendre uniforme le champ électromagnétique en correspondance des régions de moulage.

3. Moule suivant la revendication 1, caractérisé en ce que, dans les cas où les pièces à mouler n'occupent qu'une partie de l'extension du moule, lesdits organes conducteurs ont aussi, ou principalement, la fonction de concentrer le champ électromagnétique en correspondance des régions de moulage, en évitant ou limitant un réchauffement inutile des autres régions, ainsi que l'endommagement possible de pièces insérées qui pourraient être détériorées.

4. Moule suivant une quelconque des revendications précédentes, caractérisé en ce que, lorsque les plaques (1,2) limitant le moule sont connectées à une source (+,-) d'énergie électrique pour être utilisées comme armatures dans le but de réaliser une induction capacitive, au moins une partie des organes conducteurs (5,6,7,M) du moule sont connectés électriquement auxdites plaques (1,2).

5. Moule suivant une quelconque des revendications précédentes, caractérisé en ce qu'au moins une partie des organes conducteurs est connectée directement à une source d'énergie électrique d'alimentation.

6. Moule suivant une quelconque des revendications précédentes, caractérisé en ce que les organes conducteurs (5,6; 5,M) connectés directement ou indirectement à la source d'énergie électrique (+,-) sont au nombre de deux.

7. Moule suivant une quelconque des revendications précédentes, caractérisé en ce qu'au moins une partie (7) des organes conducteurs incorporés dans le moule ne sont par connectés, ni directement ni indirectement, à une source d'énergie électrique, leur fonction étant de produire des surfaces équipotentielles destinées à guider te champ électromagnétique, tout sans prendre partie active à l'application de l'énergie.

8. Moule suivant tes revendications 6 et 7, caractérisé en ce qu'il comprend au moins un troisième organe conducteur (7), incorporé dans une (4) des masses non conductrices du moule, non connecté à la source d'énergie électrique (+,-), disposé et conformé de façon telle que la permettance associée aux lignes de flux d'induction électrique qui vont de la région d'un premier organe conducteur (5) faisant face au troisième organe conducteur (7), jusqu'à ce dernier, et ensuite de ce dernier (7) à la région faisant face d'un deuxième organe conducteur (6), soit substantiellement équivalente à la permettance associée aux lignes de flux d'induction électrique qui vont directement dudit premier organe conducteur (5) audit deuxième organe conducteur (6) dans la région dans laquelle ces deux organes se font face directement.

9. Moule suivant une quelconque des revendications précédentes, caractérisé par sa destination particulière au moulage de pièces de cadre de matière plastique (K) sur des vitrages insérées (C) qui pourraient être détériorées, telles que des cristaux de véhicules, des cristaux pour bâtiments et similaires.

10. Moule suivant une quelconque des revendications précédentes, destiné à être utilisé pour le surmoulage d'une pièce insérée (C) métallique ou comportant des parties conductrices (M), caractérisé en ce que la pièce insérée elle-même, ou bien ses parties conductrices (M), ou certaines de ces dernières, sont utilisées pour constituer certains des organes conducteurs du moule.

11. Moule suivant la revendication 10, caractérisé par sa destination particulière au moulage de pièces de matière plastique (K) sur des pièces insérées (C) qui pourraient être détériorées et qui comportent des parties métalliques (M), telles que des cristaux métallisés ou incorporant des fils métalliques, des toits métallisés de véhicules, des vitres thermiques, des cristaux pour bâtiments et similaires.

## Claims

1. Mould for moulding plastic materials by means of a process wherein the needed heat is supplied to the plastic material (K) being moulded by applying to it an electromagnetic field, said mould being mainly formed by a not electrically conductive material (3,4) interposed between two plates (1,2), and being subjected to the action of means generating an electromagnetic field, connected to a suitable source of electric energy, in the not electrically conductive material (3,4) being incorporated at least one member (5,6) conductive for the electromagnetic field, which is materially in contact with one of the plates (1,2) of the mould in proximity of a region (K) active in the moulding, said member (5,6) being so shaped as to have a width greater than that of the piece to be moulded and a distance from this piece substantially constant in all points, characterized in that it comprises at least one additional conductive member (M; 7) arranged in such a way that it is not in material contact with the plates (1,2) of the mould.

2. Mould as set forth in Claim 1, characterized in that, in those cases in which the items to be moulded occupy substantially the whole extension of the mould, said incorporated conductive members mainly have the task of rendering uniform the electromagntic field in correspondence of the regions of moulding.

3. Mould as set forth in Claim 1, characterized in that, in those cases in which the items to be moulded only occupy a part of the extension of the mould, said conductive members also have, or mainly have, the task of concentrating the electromagnetic field in correspondence of the regions of moulding, by avoiding or limiting a unnecessary heating of the remaining regions, as well as the possible damage of inserted pieces susceptible of being damaged.

4. Mould as set forth in any of the foregoing Claims, characterized in that, when the mould limiting plates (1,2) are connected to a source (+,-) of electric energy in order to be used as plates generating a capacitive induction, at least a part of the conductive members (5,6,7,M) of the mould are electrically connected to said plates (1,2).

5. Mould as set forth in any of the foregoing Claims, characterized in that at least a part of the conductive members are directly connected to a source supplying electric energy.

6. Mould as set forth in any of the foregoing Claims, characterized in that the conductive members (5,6; 5,M) directly or indirectly connected to the source of electric energy (+,-) are in number of two.

7. Mould as set forth in any of the foregoing Claims, characterized in that at least some (7) of the conductive members incorporated in the mould are not directly or indirectly connected to any source of electric energy, their task being that of generating equipotential surfaces intended to lead the electromagnetic field, without actively participating to the supply of energy.

8. Mould as set forth in Claims 6 and 7, characterized in that it comprises at least a third conductive member (7), incorporated in one (4) of the not conductive bodies of the mould, not connected to the electric energy source (+,-), profiled and arranged in such a way that the permittivity inherent in the electric induction flux lines going from the region of a first conductive member (5) facing the third conductive member (7) up to this latter, and then from this latter (7) up to the facing region of a second conductive member (6), should be substantially equivalent to the permittivity inherent to the electric induction flux lines directly going from said first conductive member (5) to said second conductive member (6) in the region wherein said two members directly face the one another.

9. Mould as set forth in any of the foregoing Claims, characterized by its specific destination to the moulding of frame parts (K) of plastic material onto inserted plate glass (C) susceptible of being damaged, such as plate glass for vehicles, plate glass for buildings and the like.

10. Mould as set forth in any of the foregoing Claims, intended for being used in the co-moulding of an inserted piece (C) which is of metal or has conductive parts (M), characterized in that the inserted piece itself, or its conductive parts (M), or else some of these latter, are used in order to form some of the conductive members incorporated in the mould.

11. Mould as set forth in Claim 10, characterized by its specific destination to the moulding of parts (K) of plastic material onto inserted pieces susceptible of being damaged and having parts (M) of metal, such as plate glass which is metallized or incorporates wires, metallized roofs for vehicles, thermic windows, plate glass for buildings and the like.

## Patentansprüche

1. Form zum Formen von Kunststoffen mit einem Verfahren, bei dem die für die Formmasse (K) erforderliche Wärme durch Anwendung eines elektromagnetischen Feldes zugeführt wird, wobei die Form im wesentlichen aus einem elektrisch nicht leitenden, zwischen zwei Platten (1,2) angeordneten Werkstoff (3,4) besteht und der Wirkung von Mitteln zur Erzeugung eines elektromagnetischen Feldes ausgesetzt ist, die mit einer geeigneten elektrischen Stromquelle verbunden sind, wobei in dem elektrisch nicht leitenden Werkstoff (3,4) wenigstens ein für das elektromagnetische Feld leitendes Element (5,6) eingelassen ist, das mit der einen der Platten (1,2) des Formes in der Nähe eines aktiven Formbereiches (K) in Berührung steht, und wobei das Element (5,6) so ausgebildet ist, dass seine Breite grösser als die Breite des Formteils und sein Abstand vom Formte im wesentlichen allseitig gleichbleibend ist, dadurch gekennzeichnet, dass wenigstens ein zusätzliches leitendes Element (M; 7) vorgesehen ist, das so angeordnet ist, dass es mit den Formplatten (1,2) nicht in Berührung kommt.

2. Form nach Anspruch 1, dadurch gekennzeichnet, dass in den Fällen, in denen die Formmasse im wesentlichen die Form in seinem ganzen Ausmass füllt, die Hauptaufgabe der eingelassenen leitenden Elemente darin besteht, das elektromagnetische Feld im Bereich der Formzonen gleichmässig zu gestalten.

3. Form nach Anspruch 1, dadurch gekennzeichnet, dass in den Fällen, in denen die Formmasse nur einen Teil des Formausmasses besetzt, die leitenden Elemente auch bzw. hauptsächlich die Aufgabe erfüllen, das elektromagnetische Feld im Bereich der Formzonen zu konzentrieren und dabei eine unnötige Erwärmung der anderen Zonen sowie die eventuelle Beschädigung von empfindlichen Einsatzstücken zu vermeiden oder zu beschränken.

4. Form nach irgendeinem der vorhergehenden Ansprüche, dadurch gekennzeichnet, dass in den Fällen, in den die die Form begrenzenden Platten (1,2) an einer elektrischen Stromquelle (+,-) angeschlossen sind und als Anker benutzt werden, um eine kapazitive Induktion zu erhalten, wenigstens ein Teil der leitenden Elemente (5,6,7,M) der Form mit den Platten (1,2) elektrisch verbunden sind.

5. Form nach irgendeinem der vorhergehenden Ansprüche, dadurch gekennzeichnet, dass die leitenden Elemente wenigstens zum Teil direkt mit einer den elektrischen Strom zuführenden Quelle verbunden sind.

6. Form nach irgendeinem der vorhergehenden Ansprüche, dadurch gekennzeichnet, dass die leitenden, direkt oder indirekt mit der elektrischen Stromquelle verbundenen Elemente zwei an der Zahl sind.

7. Form nach irgendeinem der vorhergehenden Ansprüche, dadurch gekennzeichnet, dass wenigstens einige (7) der in der Form eingelassenen leitenden Elemente weder direkt noch indirekt mit einer elektrischen Stromquelle verbunden sind, da sie die Aufgabe erfüllen, zur Führung des elektromagnetischen Feldes geeignete Äquipotentialflächen zu schaffen, ohne sich allerdings an der Energiezufuhr aktiv zu beteiligen.

8. Form nach Anspruch 6 und 7, dadurch gekennzeichnet, dass sie wenigstens ein drittes leitendes Element (7) aufweist, das in einer (4) der nicht leitenden Massen der Form eingelassen, nicht an der elektrischen Stromquelle (+,-) angeschlossen, so profiliert und so angeordnet ist, dass die Permettanz der Flusslinien der elektrischen Induktion, die vom Bereich eines ersten, dem dritten leitenden Element (7) gegenüberliegenden leitenden Elementes (5) bis zum Element (7) selbst und dann von letzterem Element bis zu dem einem zweiten leitenden Element (6) gegenüberliegenden Bereich verlaufen, im wesentlichen der Permettanz der Flusslinien der elektrischen Induktion, die vom ersten leitenden Element (5) direkt bis zum zweiten leitenden Element (6) im Bereich verlaufen, in dem diese beiden Elemente einander gegenüberliegen, entspricht.

9. Form nach irgendeinem der vorhergehenden Ansprüche, dadurch gekennzeichnet, dass sie inbesondere zum Formen von Rahmenteilen (K) aus Kunststoff an eingesetzten Glasscheiben (C) bestimmt ist, die leicht beschädigt werden können, wie etwa Fahrzeugscheiben, Glasscheiben für Gebäude u.dgl.

10. Form nach irgendeinem der vorhergehenden Ansprüche, die zum Einbauen eines Einsatzstückes bestimmt ist, das aus Metall (C) hergestellt ist oder leitende Teile (M) aufweist, dadurch gekennzeichnet, dass das Einsatzstück selbst oder alle bzw. ein Teil seiner leitenden Teile (M) zur Bildung einiger der im Form eingelassenen leitenden Elemente verwendet werden.

11. Form nach Anspruch 10, durch seine besondere Anwendung zum Formen von Kunststoffteilen (K) an Einsatzstücken (C) gekennzeichnet, die beschädigt werden können und Metallteile (M) aufweisen, wie metallisierte oder mit Draht besetzte Glasscheiben, metallisierte Dachteile für Fahrzeuge, Heizscheiben, Glasscheiben für Gebäude u.dgl.
